# EUROPÄISCHE PATENTSCHRIFT

(11) **EP 1 875 135 B1**
(45) Veröffentlichungstag und Bekanntmachung des Hinweises auf die Patenterteilung: **26.09.2018**
(21) Anmeldenummer: 06708686.8
(22) Anmeldetag: 08.03.2006
(51) Int. Cl.: F23Q 7/00, G01L 23/10

(54) **GLÜHSTIFTKERZE MIT BRENNRAUMDRUCKSENSOR UND DICHTELEMENT**
GLOW PLUG WITH A COMBUSTION CHAMBER PRESSURE SENSOR AND SEALING ELEMENT
BOUGIE DE PRÉCHAUFFAGE COMPRENANT UN CAPTEUR DE PRESSION DE CHAMBRE DE COMBUSTION ET UN ÉLEMENT D'ÉTANCHÉITÉ

(30) Priorität: 18.04.2005 DE 102005017802
(43) Veröffentlichungstag der Anmeldung: 09.01.2008
(73) Patentinhaber: Robert Bosch GmbH, 70442 Stuttgart (DE); Kistler Holding AG, 8408 Winterthur (CH)
(72) Erfinder: KERN, Christoph, 71546 Aspach (DE); SCHOTT, Steffen, 71701 Schwieberdingen (DE); SALTIKOV, Pavlo, 71334 Waiblingen (DE); KLEINDL, Michael, 70435 Stuttgart (DE); ZACH, Reiko, 71686 Remseck (DE)
(86) Internationale Anmeldenummer: PCT/EP2006/060548
(87) Internationale Veröffentlichungsnummer: WO 2006/111439

(56) Entgegenhaltungen:
- EP-A- 1 460 403
- EP-A- 1 517 086
- EP-A- 1 637 806
- WO-A-2005/090865
- DE-A1- 10 020 328
- DE-A1- 19 844 347
- DE-A1- 19 852 785
- DE-A1-102004 043 874
- DE-C2- 19 680 912

## Beschreibung

Die Erfindung betrifft eine Glühstiftkerze mit integriertem Brennraumdrucksensor und einem Dichtelement. Derartige Glühstiftkerzen werden insbesondere in selbstzündenden Verbrennungskraftmaschinen zur Messung eines Brennraumdrucks eingesetzt.

### Stand der Technik

Im Zuge der stetigen Verschärfung der gesetzlichen Abgasvorschriften, insbesondere für Dieselmotoren, verschärfen sich die Anforderungen an eine verringerte Schadstoffemission von selbstzündenden Verbrennungskraftmaschinen. Moderne Motormanagementsysteme sollen neben einer geringen Schadstoffemission einen niedrigen Kraftstoffverbrauch gewährleisten und gleichzeitig eine hohe Lebensdauer aufweisen.

Eine Verbrennungsoptimierung im Brennraum eines Dieselmotors lässt sich insbesondere durch den Einsatz einer geregelten Einspritzung von Kraftstoff erzielen. Diese geregelte Einspritzung kann insbesondere gesteuert werden durch elektronische Motorsteuerungsgeräte, welche sich bereits in modernen Kraftfahrzeugen etabliert haben. Die erfolgreiche Ausführung einer brennraumdrucksignalbasierten Motorregelung (combustion signal based control system, CSC) hängt jedoch von der Verfügbarkeit produktionstauglicher Drucksensoren ab, welche hohen Anforderungen bezüglich Preis, Zuverlässigkeit, Genauigkeit und Bauraum genügen müssen.

Derzeit sind Messvorrichtungen weit verbreitet, welche so genannte "Stand-Alone"-Sensoren aufweisen. Für deren Einsatz muss eine separate Bohrung in der Zylinderkopfwand vorgesehen werden, was einen zusätzlichen Montageaufwand bedeutet. Ferner ist der Einsatz von Stand-alone Sensoren an modernen 4-Ventil-Verbrennungskraftmaschinen problematisch, da zusätzliche Bohrungen benötigt werden. Diese sind jedoch aufgrund der äußerst beengten Platzverhältnisse an 4-Ventil-Verbrennungskraftmaschinen kaum unterzubringen. Weiterhin ist in der Regel der Preis derartiger Systeme vergleichsweise hoch, und die Lebensdauer derartiger Systeme ist, zumeist bedingt durch die hohen Betriebstemperaturen, deutlich kürzer als eine typische Fahrzeuglebensdauer.

Dementsprechend gibt es im Stand der Technik Ansätze, Brennraumdrucksensoren in bereits existierende Komponenten des Zylinderkopfes zu integrieren. Eine derartige Sensorintegration in bereits existierende Komponenten des Zylinderkopfs bringt einen deutlichen Preisvorteil mit sich und macht auch einen Großserieneinsatz wirtschaftlich möglich. Bei derartigen Systemen entfällt die Notwendigkeit des direkten Zugriffs zum Brennraum. Andererseits hängt die Signalgüte derartiger Brennraumdrucksensoren stark vom Kraftverlauf im gesamten mechanischen Verbund ab und genügt in der Regel den gestellten Anforderungen nicht.

Aus DE 196 80 912 C2 ist eine Vorrichtung und ein Verfahren zum Detektieren des Zylinderdrucks in einem Dieselmotor bekannt. Die Vorrichtung weist einen Drucksensor, einen Heizabschnitt einer Glühkerze, welcher im Innenraum eines Zylinders des Dieselmotors aufgenommen ist und durch den Zylinderdruck beaufschlagbar ist sowie ein Fixierglied zum Fixieren des Heizabschnitts in einem Körper der Glühkerze auf. Dabei ist der Drucksensor zwischen dem Heizabschnitt und dem Fixierglied der Glühkerze angeordnet. Über den Heizabschnitt wird der Zylinderdruck auf den Drucksensor übertragen.

Die in DE 196 80 912 C2 offenbarte Vorrichtung weist jedoch insbesondere den Nachteil auf, dass der Drucksensor unmittelbar mit dem Heizabschnitt in Verbindung steht und somit hohen Temperaturbelastungen und Temperaturschwankungen ausgesetzt ist. Weiterhin ist eine Montage der in der DE 196 80 912 C2 beschriebenen Vorrichtung aufwendig, da zunächst der Heizabschnitt in den Körper der Glühkerze eingebracht werden muss, wonach anschließend der Drucksensor zentrisch auf dem Heizabschnitt positioniert werden muss, um eine einwandfreie Funktionalität der Vorrichtung zu gewährleisten. Anschließend muss der Drucksensor auf der vom Zylinder abgewandten Seite der Vorrichtung mittels der Fixiervorrichtung fixiert werden, was wiederum das Risiko einer Deplatzierung des Drucksensors beinhaltet. Ein Testen der Funktionalität des Drucksensors ist erst im vollständig montierten Zustand der Glühkerze möglich.

Weiterhin weist die in der DE 196 80 912 C2 offenbarte Vorrichtung den Nachteil auf, dass in Folge der Druckbelastung zwischen dem Heizabschnitt und dem Körper der Glühkerze Verspannungen auftreten können, welche zu Undichtigkeiten der Glühkerze und zu einem Eindringen von Brennraumgasen in den Innenraum der Glühkerze führen können.

Aus EP 1 517 086 A1 ist eine Druckmessglühkerze nach den Oberbegriff des Anspruchs 1 bekannt. Weiterhin offenbart DE 198 44 347 A1 eine weitere keramische Glühstiftkerze.

### Vorteile der Erfindung

Es wird daher eine Glühstiftkerze für eine selbstzündende Verbrennungskraftmaschine vorgeschlagen, welche die oben genannten Nachteile aus dem Stand der Technik bekannter Systeme vermeidet. Ein Grundgedanke der Erfindung besteht dabei darin, ein Dichtelement einzusetzen, welches einen Innenraum der Glühstiftkerze gegen Brennraumgase abdichtet und dennoch eine spannungsfreie Kraftübertragung einer durch einen Brennraumdruck verursachten Kraft auf ein Kraftmesselement ermöglicht.

Die Glühstiftkerze weist einen Heizkörper und ein Kerzengehäuse auf. Das Kerzengehäuse weist mindestens ein Kraftmesselement auf, wobei das mindestens eine Kraftmesselement derart mit dem Heizkörper verbunden ist, dass über den Heizkörper eine Kraft auf das mindestens eine Kraftmesselement vollständig oder teilweise übertragbar ist. Dabei kann diese Kraft direkt oder indirekt auf das mindestens eine Kraftmesselement übertragen werden, beispielsweise mittels mindestens eines Kraftübertragungselements. Das mindestens eine Kraftmesselement und das mindestens eine optionale Kraftübertragungselement können beispielsweise hülsenförmig ausgestaltet sein, um einen Innenraum der Glühstiftkerze optimal auszunutzen.

Durch den Druck im Brennraum der Verbrennungskraftmaschine wird eine Kraft auf den Heizkörper ausgeübt, welche wiederum auf das mindestens eine Kraftmesselement übertragen wird. Die Druckeinwirkung auf den Heizkörper verursacht dabei typischerweise eine linear-elastische Einfederung der im Kraftpfad befindlichen Bauteile, welche typischerweise im Mikrometerbereich liegt. Dabei tritt jedoch üblicherweise das Problem auf, dass insbesondere am Übergang zwischen dem Heizkörper und dem Kerzengehäuse beim Einfedern des Heizkörpers Verspannungen auftreten. Dieser Übergangsbereich, welcher typischerweise einen so genannten Dichtkonus aufweist, dient jedoch dazu, den Innenraum der Glühstiftkerze gegenüber Brennraumgasen abzudichten. Um zu verhindern, dass Brennraumgase eindringen können und um gleichzeitig eine Einfederung des Heizkörpers zu ermöglichen, weist die erfindungsgemäße Glühstiftkerze daher mindestens ein mit dem Heizkörper verbundenes Dichtelement auf. Dieses mindestens eine Dichtelement weist mindestens ein Element mit einer elastischen Eigenschaft auf. Daneben kann dieses Dichtelement optional auch plastische Eigenschaften aufweisen. Dieses mindestens eine Dichtelement dichtet den Heizkörper gegen das Kerzengehäuse ab, so dass keine Brennraumgase in das Kerzengehäuse eindringen können.

Das mindestens eine Dichtelement ist ein hülsenförmiges Dichtelement, welches den Heizkörper ringförmig umschließt. Die Verbindung zwischen dem mindestens einen Dichtelement und dem Heizkörper kann insbesondere kraftschlüssig erfolgen.

Das Kerzengehäuse ist mehrteilig ausgestaltet. Das Kerzengehäuse weist eine Gewindehülse mit einem Gewinde auf, mittels derer die Glühstiftkerze in einen Brennraum eingeschraubt werden kann, sowie mindestens einen Dichtkonus. Nun kann das mindestens eine Dichtelement ganz oder teilweise zwischen zwei dieser Teile des Kerzengehäuses eingelagert werden. Beispielsweise kann die Glühstiftkerze derart montiert werden, dass zunächst der Heizkörper mit dem mindestens einen Dichtelement auf den Gewindehülsenteil der Glühstiftkerze aufgesteckt wird. Anschließend wird der Dichtkonus aufgesteckt, wodurch das mindestens eine Dichtelement zwischen Dichtkonus und Gewindehülse eingeklemmt wird, indem der Dichtkonus auf die Gewindehülse aufgeschraubt wird. Vorteilhafterweise wird der Dichtkonus mit der Gewindehülse durch eine kraftschlüssige verbunden. Die dargestellte Art der Einlagerung des mindestens einen Dichtelements in das Kerzengehäuse bietet mehrere Vorteile. Insbesondere ist die Montage gegenüber herkömmlichen Systemen stark vereinfacht. Weiterhin kann eine Vorspannung des mindestens einen Dichtelements erfolgen. Außerdem ist bei dieser Einlagerung in der Regel eine scherspannungsfreie Abdichtung des Kerzengehäuses gewährleistet, was in bestimmten Anwendungsfällen von Vorteil sein kann.

Als vorteilhaft hat es sich erwiesen, wenn das mindestens eine Dichtelement weiterhin mindestens ein Element mit anisotropen Eigenschaften aufweist. Diese anisotropen Eigenschaften können beispielsweise in einer anisotropen elektrischen Leitfähigkeit und/oder anisotropen thermischen Leitfähigkeit und/oder einen anisotropen Elastizität bestehen. Auf diese Weise lässt sich beispielsweise besonders gut eine Kraftübertragung im Kraftpfad gewährleisten, wohingegen senkrecht zum Kraftpfad eine Stabilisierung erfolgen kann. Somit kann beispielsweise der Heizkörper gegenüber Querkräften geschützt werden.

Als besonders vorteilhaft hat es sich erwiesen, wenn das mindestens eine Dichtelement als Werkstoff Graphit aufweist. Beispielsweise kann das mindestens eine Dichtelement eine Graphitbuchse aufweisen. Insbesondere weist Graphit die angesprochenen anisotropen Eigenschaften auf. Weiterhin ist Graphit vergleichsweise weich und gut bearbeitbar. Beispielsweise kann die mindestens eine Graphitbuchse auf den Heizkörper aufgepresst werden, wodurch eine kraftschlüssige und/oder formschlüssige Verbindung entsteht.

Anstelle von Graphit lassen sich auch andere anorganische oder organische Werkstoffe einsetzen, welche ähnliche Eigenschaften haben. Hierbei kommen beispielsweise Kunststoffe in Betracht. Diese Werkstoffe sollten insbesondere eine hohe thermische Beständigkeit aufweisen, da im Kontakt mit dem Heizkörper Temperaturen über 200°C auftreten können. Beispielsweise bieten sich hier Teflon oder ähnliche Werkstoffe an. Besonders vorteilhaft ist es, wenn diese Werkstoffe eine Mohs-Härte im Bereich von 0,2 bis 3,0, vorzugsweise im Bereich von 0,3 bis 2,0 und besonders bevorzugt im Bereich von 0,5 bis 1,0 aufweisen. Bezüglich der elastischen Eigenschaften sollten die eingesetzten Werkstoffe insbesondere ein Elastizitätsmodul (Verhältnis von Spannung zu Ausdehnung) von 1 GPa bis 50 GPa, vorzugsweise im Bereich zwischen 2 und 30 GPa und besonders bevorzugt im Bereich zwischen 2 und 5,5 GPa aufweisen. Werden anisotrope Werkstoffe eingesetzt, so genügt es beispielsweise, wenn die Werkstoffeigenschaften in mindestens einer Dimension diese Bedingungen erfüllen.

Die erfindungsgemäße Glühstiftkerze in einer der oben beschriebenen Ausgestaltungen weist gegenüber aus dem Stand der Technik bekannten Glühstiftkerzen zahlreiche Vorteile auf. Insbesondere ist mittels der vorgeschlagenen Glühstiftkerze eine Brennraumdruckmessung an selbstzündenden Verbrennungskraftmaschinen, insbesondere Dieselmotoren, mittels eines einfachen Sensors, welcher in eine bereits vorhandene Zylinderkopfkomponente (nämlich die Glühstiftkerze) integriert ist, möglich. Die Ausnutzung des genannten Dichtelements, beispielsweise eines federelastischen Elements, beispielsweise in Form einer ringförmigen Buchse aus Werkstoffen wie Graphit, weist ebenfalls zahlreiche Vorteile gegenüber aus dem Stand der Technik bekannten Vorrichtungen auf.

So ermöglicht das Dichtelement, beispielsweise die Graphitbuchse, eine Abdichtung gegen Einflüsse von Brennraummedien, beispielsweise gegen hohe Drücke, einen Angriff durch korrosive Gase etc. Weiterhin bewirkt das Dichtelement, welches insbesondere elastische Eigenschaften aufweisen kann, dass die Krafteinwirkung zu einer elastischen Einfederung mit anschließender elastischer Rückfederung erfolgt. Die Einwirkung des Brennraumdrucks auf die Glühstiftkerze ist also mit einer vergleichsweise geringen Hysterese verbunden. Weiterhin wird durch das Dichtelement, welches hülsenförmig ausgestaltet ist, der Kraftpfad innerhalb der Glühstiftkerze axial geführt. Dies kann insbesondere, wie oben beschrieben, durch Ausnutzung anisotroper Eigenschaften erfolgen. Weiterhin kann durch das mindestens eine Dichtelement eine Dämpfung von Eigenschwingungen des Glühstifts erfolgen.

Ein weiterer Vorteil der Glühstiftkerze mit dem mindestens einen Dichtelement besteht darin, dass die Temperaturbeständigkeit der vorgeschlagenen Anordnung verglichen mit anderen Vorrichtungen höher ist. Insbesondere die Verwendung von Graphit führt hier zu einer erhöhten Hochtemperaturbeständigkeit im Vergleich zu anderen typischen Dichtelementen, beispielsweise Dichtelementen auf Elastomerbasis. Zudem führt insbesondere auch die Verwendung von Graphit zu einer erhöhten Korrosionsbeständigkeit des Dichtelements im Vergleich zu beispielsweise dünnwandigen Stahlmembranen.

Weiterhin kann bei Verwendung einer Graphitbuchse ein deutlich günstigerer Kraftteilungsfaktor eingestellt werden. Verglichen mit einer Variante mit in den Dichtkonus eingepresstem Heizkörper (ohne elastisches Element) wird der Kraftteilungsfaktor höher, weil ein größerer Kraftanteil über die Gehäusewandung abgeleitet wird. Zudem liegen die Herstellungskosten für eine Graphitbuchse einfacher ringförmiger Geometrie deutlich niedriger im Vergleich zu den Herstellungskosten einer Stahlmembran mit geringen Abmessungen, geringer Wandstärke und engen Toleranzen.

Zudem lässt sich die erfindungsgemäße Glühstiftkerze auch vergleichsweise einfach montieren, so dass auch Herstellungskosten erheblich gesenkt werden können. Insbesondere durch die beschriebene mehrteilige Ausgestaltung des Kerzengehäuses mit zwischen zwei Teilen eingebettetem Dichtelement ermöglicht eine einfache, schnelle und effiziente Montage. Insbesondere im Vergleich zu sonst üblichen Stahlmembranen zur Druckmessung, welche typischerweise eine oder mehrere Schweißverbindungen benötigen, ist der Einsatz des erfindungsgemäßen Dichtelements, insbesondere der Graphitbuchse, von Vorteil. Weiterhin ermöglicht das erfindungsgemäße Dichtelement eine günstige Raumaufteilung innerhalb der Glühstiftkerze, insbesondere wenn das mindestens eine Dichtelement mindestens ein ringförmiges Element aufweist. Somit ist, beispielsweise im Falle der Verwendung einer Graphitbuchse, die Einbausituation erheblich einfacher im Vergleich zu der Einbausituation in einem Drucksensor, welcher eine Stahlmembran verwendet, z. B. bei Glühstiftkerzen mit einem Heizkörper als Kraftübertragungselement oder bei Drucksensoren mit einem stabförmigen Aufnahmeelement. Auch dies bewirkt, dass die Gesamtkonstruktion der Glühstiftkerze vereinfacht wird.

### Zeichnung

Anhand der Zeichnung wird die Erfindung nachstehend näher erläutert.

Es zeigt:
- Figur 1: eine Ausgestaltung einer erfindungsgemäßen Glühstiftkerze mit einer Graphitbuchse; und
- Figur 2: eine Detaildarstellung der Fixierung des Heizelements der Glühstiftkerze gemäß Figur 1.

### Ausführungsbeispiele

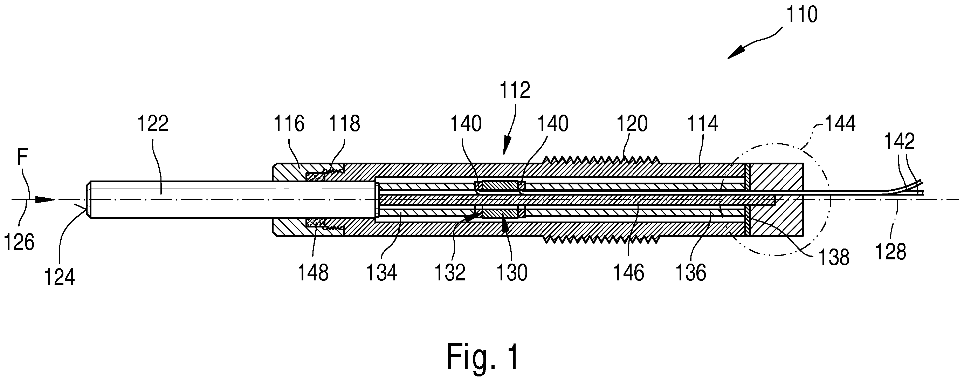

In Figur 1 ist eine erfindungsgemäße Ausführungsform einer Glühstiftkerze 110 dargestellt. Die Glühstiftkerze 110 weist ein Gehäuse 112 auf, welches wiederum eine Gewindehülse 114 und einen Dichtkonus 116 aufweist. Gewindehülse 114 und Dichtkonus 116 können mittels eines Gewindes 118 miteinander verbunden sein. Die Gewindehülse 114 weist ein Außengewinde 120 zum Einschrauben der Glühstiftkerze 110 in die Wand eines Brennraums einer Verbrennungskraftmaschine auf.

Im vorderen, einem Brennraum der Verbrennungskraftmaschine zugewandten Ende des Gehäuses 112 ist ein Heizkörper 122, beispielsweise ein keramischer Heizkörper 122, in das Gehäuse 112, insbesondere in den Dichtkonus 116, eingelassen. Der Heizkörper 122 weist an seinem dem Brennraum zugewandten Ende eine Druckfläche 124 auf. Eine Druckeinwirkung auf diese Druckfläche 124 des Heizkörpers 122 bewirkt eine Kraft 126 in Richtung einer Achse 128 der Glühstiftkerze 110 auf den keramischen Heizkörper 122. Diese Kraft 126 bewirkt eine linear-elastische Einfederung der im Kraftpfad befindlichen Bauteile der Glühstiftkerze 110, welche typischerweise im Mikrometerbereich liegt. Dadurch kann ein Kraftimpuls übertragen werden, welcher mit dem Brennraumdruck korreliert.

Eine Möglichkeit der Erfassung dieser Kraft 126 ist dadurch gegeben, dass ein im Kraftpfad vorgespanntes Kraftmesselement 130 im Gehäuse 112 der Glühstiftkerze 110 vorgesehen ist. Dieses Kraftmesselement 130 ist in diesem Ausführungsbeispiel im Gehäuse 112 derart fixiert, dass dieses die Kraft 126 und/oder Kraftimpulse vom Heizkörper 122 mittels einer in Richtung des Heizkörpers 122 gerichteten Stirnfläche 132 aufnimmt. Dabei wird die Kraft 126 in diesem Ausführungsbeispiel nicht direkt vom keramischen Heizkörper 122 auf das Kraftmesselement 130 übertragen, sondern mittels eines Kraftübertragungselements 134. Auf der dem Brennraum abgewandten Seite der Glühstiftkerze 110 ist das Kraftmesselement 130 mittels eines Abstützelements 136 gegen eine Rückwand 138 der Glühstiftkerze 110 abgestützt. Sowohl Kraftübertragungselement 134 als auch Kraftmesselement 130 und Abstützelement 136 sind in diesem Ausführungsbeispiel zylinderhülsenförmig ausgestaltet.

In diesem Ausführungsbeispiel gemäß Figur 1 ist das Kraftmesselement 130 als piezoelektrisches Sensorelement ausgestaltet. Bei einer mechanischen Belastung erzeugt dieses piezoelektrische Sensorelement 130 eine Ladung und somit eine Spannung, welche wiederum von den Oberflächen des piezoelektrischen Sensorelements 130 mittels einer Kontaktierung in Form einer Metallisierung 140 abgegriffen und durch Signalleitungen 142 über ein Steckverbinderelement 144 zur Auswertung aus der Glühstiftkerze 110 herausgeführt werden kann. Das piezoelektrische Sensorelement 130 kann sowohl ferroelektrische Piezokeramiken (z. B. Bleizirkonattitanat, Wismuttitanat etc.) als auch einkristalline Materialien (z. B. Quarz, Langasit, Lithiumniobat, Galliumorthophosphat etc.) aufweisen. Insbesondere kann das piezoelektrische Sensorelement 130 ringförmig ausgestaltet sein, beispielsweise als Piezo-Stapel, wodurch ein axialer Bauraum in der Mitte des Kraftmesselements 130 verbleibt.

Die in diesem Ausführungsbeispiel eingesetzte ringförmige Ausgestaltung von Kraftübertragungselement 134, Kraftmesselement 130 und Abstützelement 136 bewirkt, dass der Bauraum im Inneren des Gehäuses 112 der Glühstiftkerze 110 optimal ausgenutzt wird. Dabei verbleibt in Nähe der Achse 128 genügend Platz für eine Glühstromzuleitung 146. Die Glühstromzuleitung 146 kann beispielsweise als Stahlanschlussbolzen ausgestaltet sein oder kann zur zusätzlichen Einsparung von Bauraum auch durch eine dünne bzw. nachgiebige Drahtstromzuleitung ersetzt werden.

Anstelle von piezoelektrischen Sensorelementen 130 lassen sich auch verschiedene andere Arten von Kraftmesselementen einsetzen, welche eine mechanische Belastung in entsprechende elektrische Signale umwandeln. Die vom Kraftmesselement 130 erfassten Signale, welche über die Signalleitungen 142 abgegriffen werden, können beispielsweise einer entsprechenden Elektronik, welche insbesondere Bestandteil eines Motorsteuerungsgeräts sein kann, zugeführt werden. Somit stehen diese Drucksignale beispielsweise einer brennraumdrucksignalbasierten Motorregelung zur Verfügung.

Wenn die Kraft 126 auf die Druckfläche 124 des Heizkörpers 122 ausgeübt wird, so wird über das Kraftübertragungselement 134 eine Kraft auf das Kraftmesselement 130 ausgeübt. Dabei werden insbesondere der keramische Heizkörper 122 und das Kraftübertragungselement 134 sowie das Kraftmesselement 130 linear-elastisch eingefedert. Bei diesem Einfedern können sich insbesondere am Übergang zwischen dem keramischen Heizelement 122 und dem Gehäuse 112 der Glühstiftkerze 110 Spannungen ausbilden. Dieser Übergang ist jedoch kritisch, da in diesem Bereich der Innenraum der Glühstiftkerze 110 gegenüber den Brennraumgasen abgedichtet wird. Daher weist die in Figur 1 dargestellte Ausgestaltung einer Glühstiftkerze 110 zur Abdichtung gegen Brennraumgase ein hülsenförmiges federelastisches Dichtelement 148, insbesondere in Form einer ringförmigen Graphitbuchse 148, auf. Moderne Herstellungsverfahren erlauben die Fertigung von Graphitbauteilen unterschiedlicher Ringgeometrien. Dank der besonderen Werkstoffeigenschaften von Graphit können Graphiterzeugnisse multifunktional eingesetzt werden.

Die Vorteile des Graphits gegenüber anderen Werkstoffen sind beispielsweise eine hohe Temperaturbeständigkeit innerhalb eines Bereichs von -220°C bis 550°C. Weiterhin weisen derartige Graphitelemente eine hohe chemische Beständigkeit gegenüber fast allen Medien sowie gute mechanische Eigenschaften innerhalb des gesamten Temperaturbereichs und eine hohe Alterungsbeständigkeit auf. Außerdem zeichnet sich Graphit durch eine Richtungsabhängigkeit (Anisotropie) der physikalischen Eigenschaften, beispielsweise der thermischen und elektrischen Leitfähigkeit, aus. Graphit besitzt hohe thermische und elektrische Leitfähigkeit. Sehr weit verbreitet sind Anwendungen von Graphitringen in Bereichen der Technik, in denen eine Abdichtung gegenüber aggressiven Medien bei hohen Temperaturen gewährleistet werden muss. Auch die Anwendung von Graphiteinlagen zur Verbesserung von Elastizitätseigenschaften metallischer Wellendichtungen ist bekannt. Mittels moderner Herstellungsverfahren sind Graphitringe mit einem Außendurchmesser von 3 mm herstellbar.

Aufgrund der genannten Vorzüge sind Dichtelemente 148 in Form von Graphitbuchsen für die genannte Anwendung in Glühstiftkerzen 110 besonders geeignet. Insbesondere auch die Verfügbarkeit von Graphitringen mit einem Außendurchmesser von 3 mm ist angesichts des geringen zur Verfügung stehenden Innendurchmessers des Innenraums des Gehäuses 112 der Glühstiftkerze 110, welcher typischerweise lediglich ca. 5 mm beträgt, von besonderem Interesse. Derartig geringe Innendurchmesser würden normalerweise eine kostenintensive Herstellung eine Stahlmembran mit geringen Abmessungen, geringer Wandstärke und engen Toleranzen sowie eine aufwändige Montage dieser Stahlmembran mit hoher erforderlicher Genauigkeit (beispielsweise mittels Laserschweißen) erforderlich machen, was einen hohen Kostenaufwand verursacht. Durch die Verwendung einer Graphitbuchse als Dichtelement 148 lassen sich diese Kosten weitgehend vermeiden. Durch die federnden Eigenschaften der Graphitbuchse bei gleichzeitig einer leicht realisierbaren Geometrie wird somit eine einfache Konstruktion sowie Montage ermöglicht.

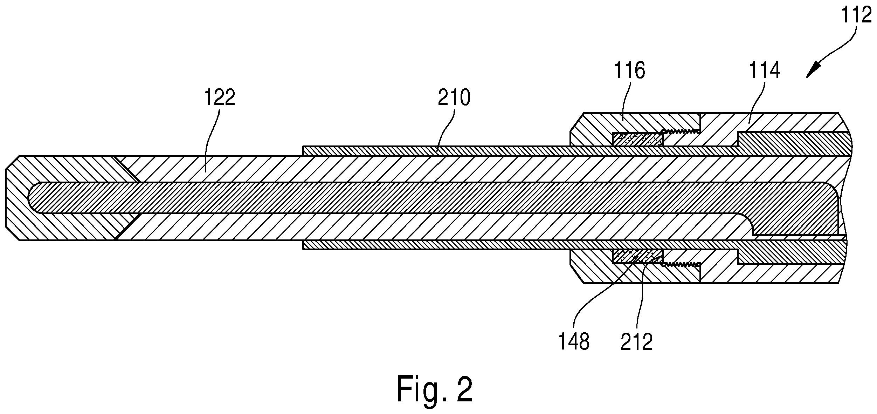

In Figur 2 ist eine Detailansicht des vorderen Bereichs der Glühstiftkerze 110 dargestellt. Dabei ist in der Darstellung gemäß Figur 2 die Glühstiftkerze 110 gemäß Figur 1 dahingehend erweitert, dass zusätzlich ein Stützrohr 210 auf den keramischen Heizkörper 122 der Glühstiftkerze 110 aufgebracht ist. Das Dichtelement 148 in Form einer Graphitbuchse ist in diesem Ausführungsbeispiel auf die äußere Mantelfläche des Stützrohres 210 aufgebracht. Das Stützrohr 210 kann beispielsweise als Werkstoff Stahl aufweisen. Alternativ kann die Graphitbuchse 148 auch unmittelbar auf den keramischen Heizkörper 122 aufgebracht werden.

In diesem Ausführungsbeispiel befinden sich der keramische Heizkörper 122 und gegebenenfalls das Stützrohr 210 direkt im Kraftpfad der Kraft 126 und sind somit einer dynamischen Krafteinwirkung ausgesetzt. Über diese Elemente 122, 210 wird somit die Kraft 126 auf das Kraftübertragungselement 134 und weiter auf das Kraftmesselement 130 übertragen.

Das Dichtelement 148 in Form der Graphithülse 148 wird in diesem Ausführungsbeispiel kraftschlüssig mit dem keramischen Heizkörper 122 verbunden und stützt sich auf einem Gehäuseanschlag 212 des Gehäuses 112 der Glühstiftkerze 110 ab. Aufgrund der elastischen Eigenschaften der Graphitbuchse 148 wird der keramische Heizkörper 122 nach jedem Druckimpuls zumindest weitgehend, d. h. bis auf Hystereseeffekte, in seine ursprüngliche Lage zurückgebracht.

Die Abdichtung der Glühstiftkerze 110 gegen Einflüsse von Brennraummedien (z. B. hohen Drücken, Korrosionsangriff etc.) erfolgt in diesem Ausführungsbeispiel gemäß den Figuren 1 und 2 durch die Einbettung des Dichtelements 148 zwischen der Gewindehülse 114 und dem Dichtkonus 116 des Gehäuses 112 der Glühstiftkerze 110. Dabei machen sich Fließeigenschaften des Graphits vorteilhaft bemerkbar, da durch leichtes Fließen des Graphits mögliche Oberflächen- und Montagefehler ausgeglichen werden können.

Normalerweise wird die Abdichtung des Gehäuses 112 der Glühstiftkerze 110 bei der Montage dadurch bewerkstelligt, dass die Graphitbuchse 148 beim Zusammenfügen von Dichtkonus 116 und Gewindehülse 114 axial verpresst wird. Dabei erfolgt die Vorspannung der Graphitbuchse 148 vorzugsweise unabhängig von einer Vorspannung des Kraftpfades. In dem Ausführungsbeispiel gemäß den Figuren 1 und 2 wird die Graphitbuchse 148 im vorderen Teil des Gehäuses 112 außerhalb des Kraftpfades vorgespannt. Durch diese Maßnahme kann insbesondere die Verformung der Graphitbuchse 148 minimiert werden, was wiederum die Hystereseeigenschaften, insbesondere mechanische Hystereseeigenschaften, der Graphitbuchse 148 begünstigt bzw. eine derartige Hysterese verringert.

### Bezugszeichenliste

- 110: Glühstiftkerze
- 112: Gehäuse
- 114: Gewindehülse
- 116: Dichtkonus
- 118: Gewinde
- 120: Außengewinde
- 122: keramischer Heizkörper
- 124: Druckfläche
- 126: Kraft
- 128: Achse
- 130: Kraftmesselement
- 132: Stirnfläche
- 134: Kraftübertragungselement
- 136: Abstützelement
- 138: Rückwand
- 140: Kontaktierung
- 142: Signalleitungen
- 144: Steckverbinderelement
- 146: Glühstromzuleitung
- 148: Dichtelement
- 210: Stützrohr
- 212: Gehäuseanschlag

## Patentansprüche

1. Glühstiftkerze (110) für eine selbstzündende Verbrennungskraftmaschine mit einem Heizkörper (122) und einem Kerzengehäuse (112), wobei das Kerzengehäuse (112) mindestens ein Kraftmesselement (130) aufweist, wobei das mindestens eine Kraftmesselement (130) derart mit dem Heizkörper (122) verbunden ist, dass über den Heizkörper (122) eine Kraft (126) auf das mindestens eine Kraftmesselement (130) übertragbar ist, und mit mindestens einem mit dem Heizkörper (122) verbundenen Dichtelement (148), wobei das mindestens eine Dichtelement mindestens ein Dichtelement mit einer elastischen Eigenschaft aufweist, wobei das mindestens eine Dichtelement den Heizkörper (122) gegen das Kerzengehäuse (112) abdichtet, wobei das Kerzengehäuse (112) mindestens eine Gewindehülse (114) und mindestens einen Dichtkonus (116) aufweist, wobei der mindestens eine Dichtkonus (116) mit der mindestens einen Gewindehülse (114) verbindbar ist, und wobei das mindestens eine Dichtelement zwischen der mindestens einen Gewindehülse (114) und dem mindestens einen Dichtkonus (116) aufgenommen ist, **dadurch gekennzeichnet, dass** das mindestens eine Dichtelement mindestens ein hülsenförmiges Dichtelement (148) ist, welches den Heizkörper (122) ringförmig umschließt und welches sich auf einem Gehäuseanschlag (212) des Gehäuses (112) abstützt, und dass das mindestens eine hülsenförmige Dichtelement (148) zwischen Dichtkonus (116) und Gewindehülse (114) eingeklemmt ist, indem der Dichtkonus (116) auf die Gewindehülse (114) aufgeschraubt wird.

2. Glühstiftkerze (110) gemäß Anspruch 1, **dadurch gekennzeichnet, dass** das mindestens eine hülsenförmige Dichtelement (148) kraftschlüssig mit dem Heizkörper (122) verbunden ist.

3. Glühstiftkerze (110) gemäß Anspruch 1 oder 2, **dadurch gekennzeichnet, dass** das mindestens eine hülsenförmige Dichtelement (148) mindestens eine der folgenden Eigenschaften aufweist: eine anisotrope elektrische Leitfähigkeit; eine anisotrope thermische Leitfähigkeit; eine anisotrope Elastizität.

4. Glühstiftkerze (110) gemäß Anspruch 1 oder 2, **dadurch gekennzeichnet, dass** das mindestens eine hülsenförmige Dichtelement (148) mindestens eine der folgenden Eigenschaften aufweist: eine isotrope elektrische Leitfähigkeit; eine isotrope thermische Leitfähigkeit; eine isotrope Elastizität.

5. Glühstiftkerze (110) gemäß einem der vorhergehenden Ansprüche, **dadurch gekennzeichnet, dass** das mindestens eine hülsenförmige Dichtelement (148) eine Mohs-Härte im Bereich von 0,2 bis 3,0, vorzugsweise im Bereich von 0,3 bis 2,0 und besonders bevorzugt im Bereich von 0,5 bis 1,0 aufweist.

6. Glühstiftkerze (110) gemäß einem der vorhergehenden Ansprüche, **dadurch gekennzeichnet, dass** das mindestens eine hülsenförmige Dichtelement (148) einen Elastizitätsmodul im Bereich von 1 GPa bis 50 GPa, vorzugsweise im Bereich zwischen 2 und 30 GPa und besonders bevorzugt im Bereich zwischen 4 und 5,5 GPa aufweist.

7. Glühstiftkerze (110) gemäß einem der vorhergehenden Ansprüche, **dadurch gekennzeichnet, dass** das mindestens eine hülsenförmige Dichtelement (148) Graphit aufweist.

8. Glühstiftkerze (110) gemäß einem der vorhergehenden Ansprüche, **gekennzeichnet durch** mindestens ein Kraftübertragungselement (134), wobei mittels des mindestens einen Kraftübertragungselements (134) eine Kraft (126) von dem Heizkörper (122) auf das mindestens eine Kraftmesselement (130) übertragbar ist.

9. Glühstiftkerze (110) gemäß einem der vorhergehenden Ansprüche, **dadurch gekennzeichnet, dass** das mindestens eine Kraftmesselement (130) mindestens einen piezoelektrischen Wandler (130) oder einen piezoresistiven Wandler aufweist.

## Claims

1. Sheathed-element glow plug (110) for a compression ignition internal combustion engine having a heating body (122) and a plug housing (112), the plug housing (112) having at least one force measuring element (130), the at least one force measuring element (130) being connected to the heating body (122) in such a way that a force (126) can be transmitted via the heating body (122) to the at least one force measuring element (130), and having at least one sealing element (148) which is connected to the heating body (122), the at least one sealing element having at least one sealing element with an elastic property, the at least one sealing element sealing the heating body (122) against the plug housing (112), the plug housing (112) having at least one threaded sleeve (114) and at least one sealing cone (116), it being possible for the at least one sealing cone (116) to be connected to the at least one threaded sleeve (114), and the at least one sealing element being received between the at least one threaded sleeve (114) and the at least one sealing cone (116), **characterized in that** the at least one sealing element is at least one sleeve-shaped sealing element (148) which encloses the heating body (122) in an annular manner and which is supported on a housing stop (212) of the housing (112), and **in that** the at least one sleeve-shaped sealing element (148) is clamped in between the sealing cone (116) and the threaded sleeve (114), by the sealing cone (116) being screwed onto the threaded sleeve (114).

2. Sheathed-element glow plug (110) according to Claim 1, **characterized in that** the at least one sleeve-shaped sealing element (148) is connected in a non-positive manner to the heating body (122).

3. Sheathed-element glow plug (110) according to Claim 1 or 2, **characterized in that** the at least one sleeve-shaped sealing element (148) has at least one of the following properties: an anisotropic electric conductivity, an anisotropic thermal conductivity; an anisotropic elasticity.

4. Sheathed-element glow plug (110) according to Claim 1 or 2, **characterized in that** the at least one sleeve-shaped sealing element (148) has at least one of the following properties: an isotropic electric conductivity; an isotropic thermal conductivity; an isotropic elasticity.

5. Sheathed-element glow plug (110) according to one of the preceding claims, **characterized in that** the at least one sleeve-shaped sealing element (148) has a Mohs hardness in the range from 0.2 to 3.0, preferably in the range from 0.3 to 2.0 and particularly preferably in the range from 0.5 to 1.0.

6. Sheathed-element glow plug (110) according to one of the preceding claims, **characterized in that** the at least one sleeve-shaped sealing element (148) has a modulus of elasticity in the range from 1 GPa to 50 GPa, preferably in the range between 2 and 30 GPa and particularly preferably in the range between 4 and 5.5 GPa.

7. Sheathed-element glow plug (110) according to one of the preceding claims, **characterized in that** the at least one sleeve-shaped sealing element (148) comprises graphite.

8. Sheathed-element glow plug (110) according to one of the preceding claims, **characterized by** at least one force transmission element (134), it being possible for a force (126) to be transmitted from the heating body (122) to the at least one force measuring element (130) by means of the at least one force transmission element (134) .

9. Sheathed-element glow plug (110) according to one of the preceding claims, **characterized in that** the at least one force measuring element (130) has at least one piezoelectric transducer (130) or one piezoresistive transducer.

## Revendications

1. Bougie crayon de préchauffage (110) pour un moteur à combustion interne à allumage par compression, comprenant un corps chauffant (122) et un corps de bougie (112), le corps de bougie (112) possédant au moins un élément de mesure de force (130), l'au moins un élément de mesure de force (130) étant relié au corps chauffant (122) de telle sorte qu'une force (126) peut être transmise à l'au moins un élément de mesure de force (130) par le biais du corps chauffant (122), et comprenant au moins un élément d'étanchéité (148) relié au corps chauffant (122), l'au moins un élément d'étanchéité possédant au moins un élément d'étanchéité ayant une propriété élastique, l'au moins un élément d'étanchéité réalisant l'étanchéité du corps chauffant (122) par rapport au corps de bougie (112), le corps de bougie (112) possédant au moins une douille filetée (114) et au moins un cône d'étanchéité (116), l'au moins un cône d'étanchéité (116) pouvant être relié à l'au moins une douille filetée (114), et l'au moins un élément d'étanchéité étant accueilli entre l'au moins une douille filetée (114) et l'au moins un cône d'étanchéité (116), **caractérisée en ce que** l'au moins un élément d'étanchéité est au moins un élément d'étanchéité (148) en forme de douille qui entoure le corps chauffant (122) en forme de bague et qui s'appuie sur une butée de corps (212) du corps (112), et **en ce que** l'au moins un élément d'étanchéité (148) en forme de douille est coincé entre le cône d'étanchéité (116) et la douille filetée (114) en vissant le cône d'étanchéité (116) sur la douille filetée (114).

2. Bougie crayon de préchauffage (110) selon la revendication 1, **caractérisée en ce que** l'au moins un élément d'étanchéité (148) en forme de douille est relié par assemblage par force avec le corps chauffant (122).

3. Bougie crayon de préchauffage (110) selon la revendication 1 ou 2, **caractérisée en ce que** l'au moins un élément d'étanchéité (148) en forme de douille possède au moins l'une des propriétés suivantes : une conductivité électrique anisotrope ; une conductivité thermique anisotrope ; une élasticité anisotrope.

4. Bougie crayon de préchauffage (110) selon la revendication 1 ou 2, **caractérisée en ce que** l'au moins un élément d'étanchéité (148) en forme de douille possède au moins l'une des propriétés suivantes : une conductivité électrique isotrope ; une conductivité thermique isotrope ; une élasticité isotrope.

5. Bougie crayon de préchauffage (110) selon l'une des revendications précédentes, **caractérisée en ce que** l'au moins un élément d'étanchéité (148) en forme de douille possède une dureté Mohs dans la plage de 0,2 à 3,0, de préférence dans la plage de 0,3 à 2,0 et notamment de préférence dans la plage de 0,5 à 1,0.

6. Bougie crayon de préchauffage (110) selon l'une des revendications précédentes, **caractérisée en ce que** l'au moins un élément d'étanchéité (148) en forme de douille possède un module d'élasticité dans la plage de 1 GPa à 50 GPa, de préférence dans la plage entre 2 et 30 GPa et notamment de préférence dans la plage entre 4 et 5,5 GPa.

7. Bougie crayon de préchauffage (110) selon l'une des revendications précédentes, **caractérisée en ce que** l'au moins un élément d'étanchéité (148) en forme de douille possède du graphite.

8. Bougie crayon de préchauffage (110) selon l'une des revendications précédentes, **caractérisée par** au moins un élément de transmission de force (134), une force (126) pouvant être transmise du corps chauffant (122) à l'au moins un élément de mesure de force (130) par le biais de l'au moins un élément de transmission de force (134).

9. Bougie crayon de préchauffage (110) selon l'une des revendications précédentes, **caractérisée en ce que** l'au moins un élément de mesure de force (130) possède au moins un convertisseur piézoélectrique (130) ou un convertisseur piézorésistif.
